# EUROPEAN PATENT APPLICATION

(11) **EP 4 636 316 A1**
(43) Date of publication of application: **22.10.2025**
(21) Application number: 25170020.9
(22) Date of filing: 11.04.2025
(51) Int. Cl.: F24C 15/02, F24C 15/14

(54) **AN OVEN, IN PARTICULAR A COUNTERTOP STEAM OVEN**

(30) Priority: 16.04.2024 IT 202400008596
(71) Applicant: SMEG S.p.A., 42016 Guastalla (RE) (IT)
(72) Inventor: PONTALTI, Damiano, 42016 GUASTALLA (RE) (IT); RASCHI, Lorenzo, 42016 GUASTALLA (RE) (IT)
(74) Representative: Studio Torta S.p.A.

(57) **Abstract**

An oven, preferably a countertop steam oven; wherein the oven comprises: an outer box-shaped frame defining a cooking chamber and comprising a door movable between a substantially vertical closed position wherein it isolates the cooking chamber and a substantially horizontal open position wherein the user can access the cooking chamber; wherein the door comprises: an outer panel; an inner panel arranged, in use, between the outer panel and the cooking chamber at a distance from the outer panel; optionally an intermediate panel; a door frame configured to support the panels and coupled via hinges to the outer frame to allow movement of the door; a drip-collecting profile coupled on one side to a lower edge of the inner panel and on another side to the door frame; wherein the coupling between the drip-collecting profile and the door frame is selectively releasable.

## Description

### Cross reference to related Applications

This patent application claims priority from Italian Patent Application no. 102024000008596 filed on April 16, 2024, the entire disclosure of which is incorporated herein by reference.

### Technical field of the invention

The present invention relates to an oven, preferably a countertop steam oven, comprising a movable door provided with an outer panel and an inner panel with one face exposed to the cooking chamber. In this context, the present invention will address the problem of how to make the inner panel removable (to facilitate cleaning thereof) in a simple way and without adding new elements.

### Background Art

As known, an oven comprises a cooking chamber, defined by a substantially box-shaped frame and accessible acting on a movable door. One of the main functions of the oven door is to prevent losing heat present in the cooking chamber, and at the same time to allow visual control of food being cooked. In addition, the oven door must be properly thermally isolated to prevent excessive heating of the outer surface of the door. Thus, currently known doors comprise a frame supporting a plurality of panels made at least in part of transparent material and arranged at a certain distance from each other so as to form a gap between each panel. During cooking, the inner face of the inner panel facing the cooking chamber becomes easily soiled, and it is therefore sometimes required to remove the inner panel from the door in order to carry out an effective and thorough cleaning. It is therefore known that the inner panel can be selectively removed from the rest of the structure. In the case of steam ovens, it is also known to equip the lower edge of the door with a drip-collecting profile configured such that, during the opening of the oven, it collects drips that may be present on the inner face of the inner panel and guides them to a tank inside the oven.

Based on the prior art, the aim of the present invention is to make it easy to remove the inner panel without adding additional components. Indeed, according to the present invention, the function of enabling the removal of the inner panel will be transferred to a component already present in the oven and only specifically modified.

### Object and Summary of the Invention

According to the present invention, an oven, preferably a steam oven (e.g. countertop), is made, wherein the oven comprises:
- a box-shaped outer frame defining a cooking chamber and comprising a front door movable (preferably by rotation about an axis passing through its lower edge) between a substantially vertical closed position, wherein it isolates the cooking chamber, and a substantially horizontal open position, wherein the user can access the cooking chamber and the inner face of the door itself.

In this structure, the door of the present invention comprises:
- an external panel;
- an inner panel arranged, in use, between the outer panel and the cooking chamber at a distance from the outer panel; the inner panel thus has a face that in use is directly exposed to the cooking chamber;
- eventually an intermediate panel;
- a door frame configured to support the panels and coupled at the bottom via hinges to the outer frame to enable the door to move.

If necessary, a third panel between the outer panel and the inner panel may also be provided.

The oven of the present invention is a steam oven (i.e. it can also perform steam cooking) and comprises a drip-collecting profile coupled on one side to the lower edge of the inner panel and on another side to the door frame. The drip-collecting profile preferably runs substantially along the lower edge of the inner panel and is configured such that during the opening of the oven it collects drips that may be present falling down the inner face of the inner panel and guides them towards a fixed channel (formed in the outer frame, e.g. in the inner face of the lower wall of the outer frame) to discharge them to a tank inside the oven.

Then the inner panel, at its lower edge, is connected to the door frame via the drip-collecting profile.

In this context, according to the main aspect of the present invention, the coupling between the drip-collecting profile and the door frame is of the selectively releasable type.

Thus, according to the present invention, the drip-collecting profile also fulfils the function of a releasable coupling and has been modified accordingly (as well as the door frame has been modified in the portions coupling with the drop catcher profile).

The releasable coupling between the drip-collecting profile and the door frame is accessible to the user with the door at least partially open and is made in the form of one or more elastic lips which protrude from the drip-collecting profile towards corresponding portions of the door frame where one or more window seats (or vice versa) have been obtained. Being elastic, the lips flex to enter the windows (they have a sloping profile for easy coupling purpose) and once inserted, they return to their position and remain locked in the window (a special step is provided on the lip). In order to release the lips, the user only has to press them in order to let them out (backward position) of the windows. In this position, the lower edge of the inner panel can be lifted. This lifting is allowed because the upper edge of the inner panel (opposite the drip catcher) is simply housed in one or more U-shaped seats in the door frame, and therefore the panel can rotate about the upper edge still housed in the U-shaped seats (obviously with the opposite edge free). In the rotated position about the upper edge, the inner panel may be removed from the door frame by simply sliding the upper edge out of the U-shaped seats.

Preferably, two elastic lips are provided substantially at opposite ends of the drip-collecting profile.

Preferably, the coupling between the drip-collecting profile and the lower edge of the inner panel is also selectively releasable. For example, the drip-collecting profile can comprise at least one U-shaped seat (preferably at the lips) to receive the lower edge of the inner panel.

### Brief Description of the Drawings

To better understand the present invention, a preferred embodiment thereof will be now described, for merely exemplary and non-limiting purposes, with reference to the appended drawings, wherein:
- Figure 1 is a schematic view of a countertop oven that can be improved thanks to the present invention;
- Figure 2 is a section view of some elements of the oven in Figure 1;
- Figure 3 is an enlarged view of the detail indicated with III in Figure 2;
- Figure 4 is an enlarged view of a portion of the oven door in Figure 1, showing how the inner panel is coupled to the rest of the door;
- Figures 5-7 show successive steps in the process of removing the inner panel.

### Preferred Embodiment of the Invention

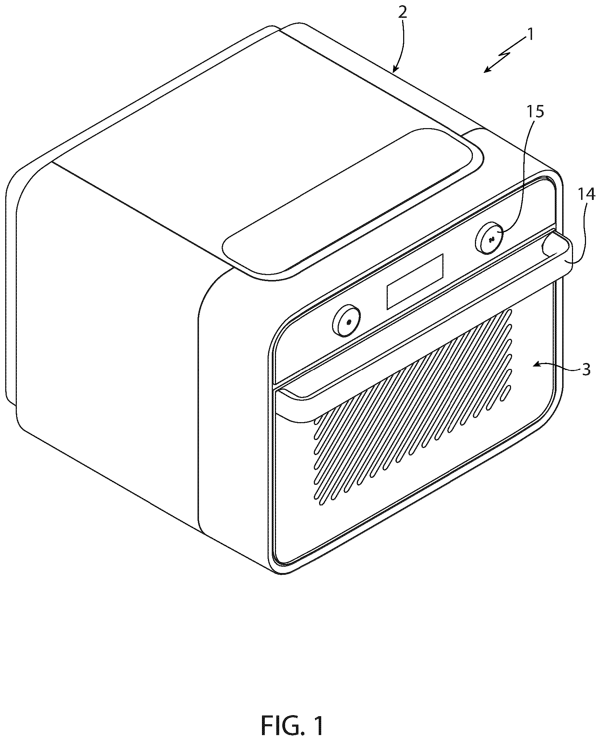

Figure 1 is a schematic view of a countertop oven 1 which can be improved thanks to the present invention. This oven 1 is countertop (not built-in) and comprises a box-shaped outer frame 2 that defines a cooking chamber. The oven 1 thus comprises a front door 3 rotatable about its lower edge to switch from the position in Figure 1 (in which it closes the cooking chamber) to a horizontal position that is substantially flush with the lower wall of the outer frame 2. In this position, the user has free access to the cooking chamber and to the inner face of door 3. References 14 and 15 in Figure 1 identify a handle for moving the door 3 and commands actuating the oven 1.

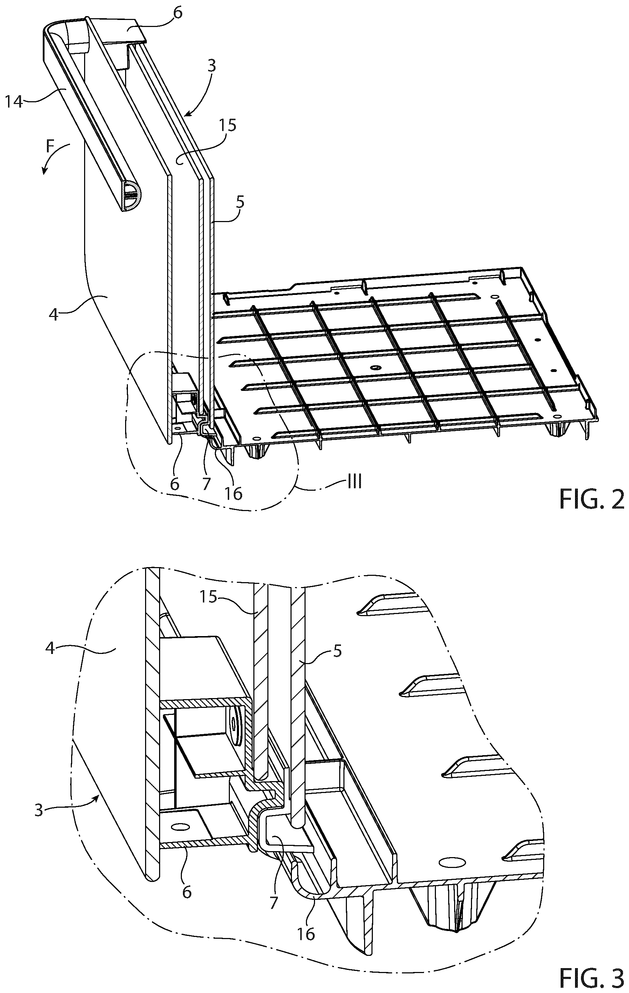

Figure 2 is a section view of some elements of the oven in Figure 1. Figure 2 allows to see how, in this example, the door 3 (moving along the arrow F) comprises an outer panel 4, an inner panel 5 and an intermediate panel 15. These panels are supported parallel to each other and spaced by a door frame 6 in the form of two vertical posts extending from the lower edge of the panels to their upper edge. The outer panel 4 is non-removably attached to the door frame 6 whereas the inner panel 5 according to the present invention is removable. In the example shown in the figures, wherein the intermediate panel is also present, the latter can also be removably engaged. Figure 3 is an enlarged view of the detail indicated with III in Figure 2 and shows a drip-collecting profile 7 coupled to the lower edge of the inner panel 5. The drip-collecting profile 7 is configured such that during the opening of the oven it collects drips that may be present falling by gravity along the inner face of the inner panel 3 and guides them towards a channel 16 of the frame 2 to discharge them to a tank inside the oven 1.

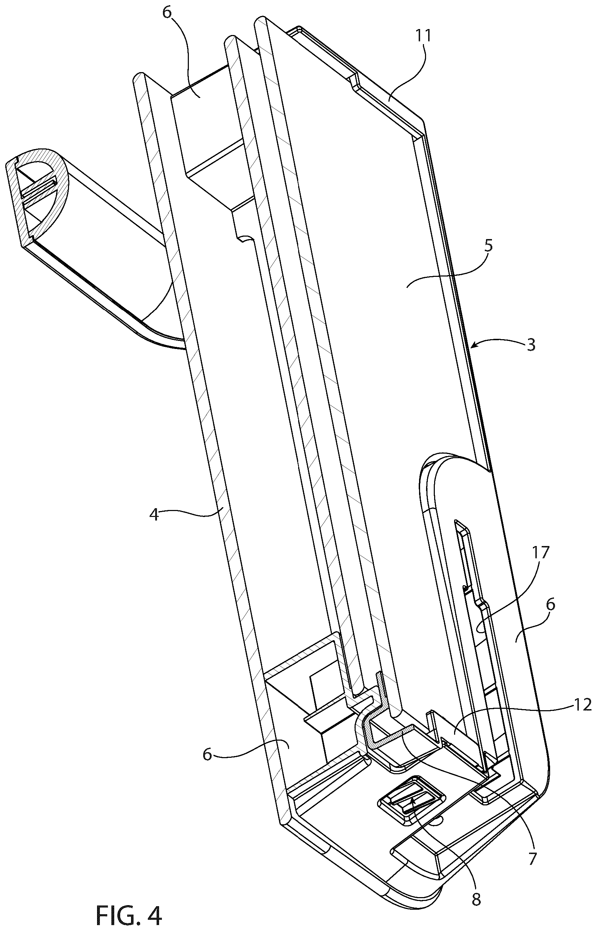

Figure 4 is an enlarged view of a portion of the oven door in Figure 1, showing how the upright 6 (door frame) is coupled to the inner panel 5. This example shows the lower edge of the inner panel 5 inserted into a U-shaped seat 12 of the drip-collecting profile 7 which in turn is coupled with a lower portion of the upright 6 by means of a releasable snap-coupling 8. This releasable snap-coupling 8 comprises an elastic lip 9 that is snap-fitted into a corresponding window seat 10 obtained in the upright 6. A similar coupling 8 is also present on the opposite side of the lower edge of the inner panel 5. By contrast, the upper edge of the panel 5 is only inserted into a U-shaped seat 11 obtained in the upper part of the upright 6. The side edges of the inner panel 5 only lean against the upright 6 (not engaged nor inserted in special seats). Reference 17 indicates the seats housing the hinges (not shown) for coupling the door 3 to the rest of the oven 1.

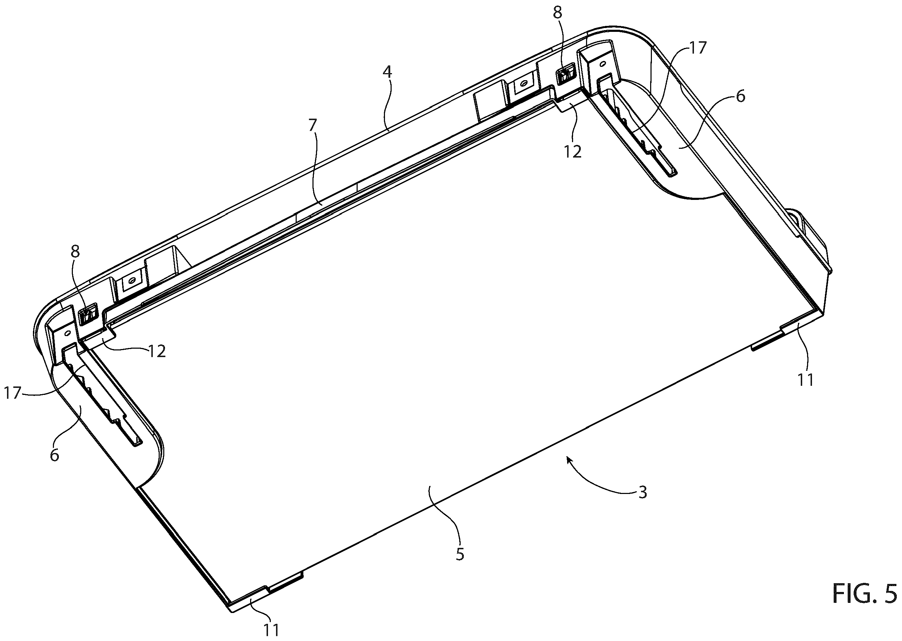

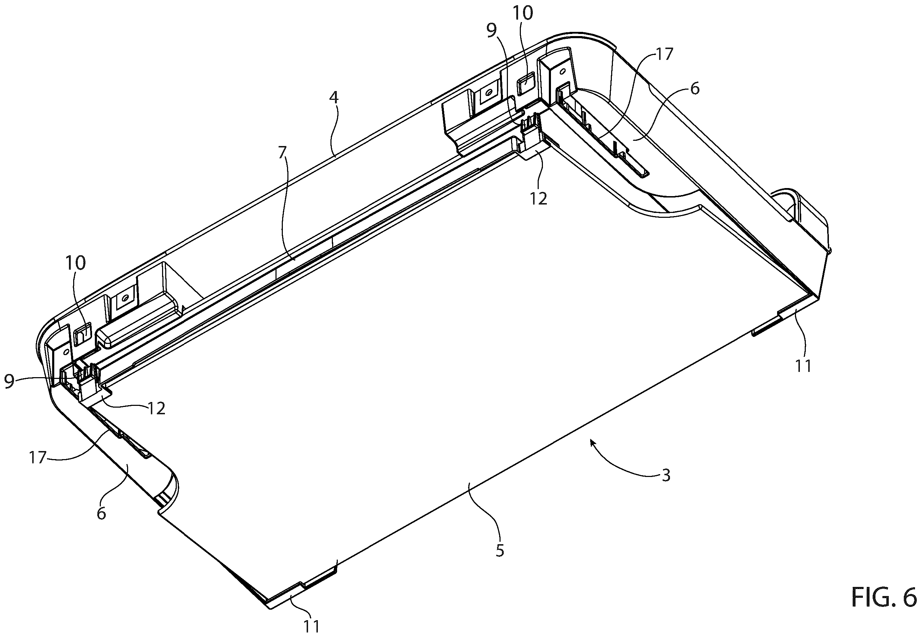

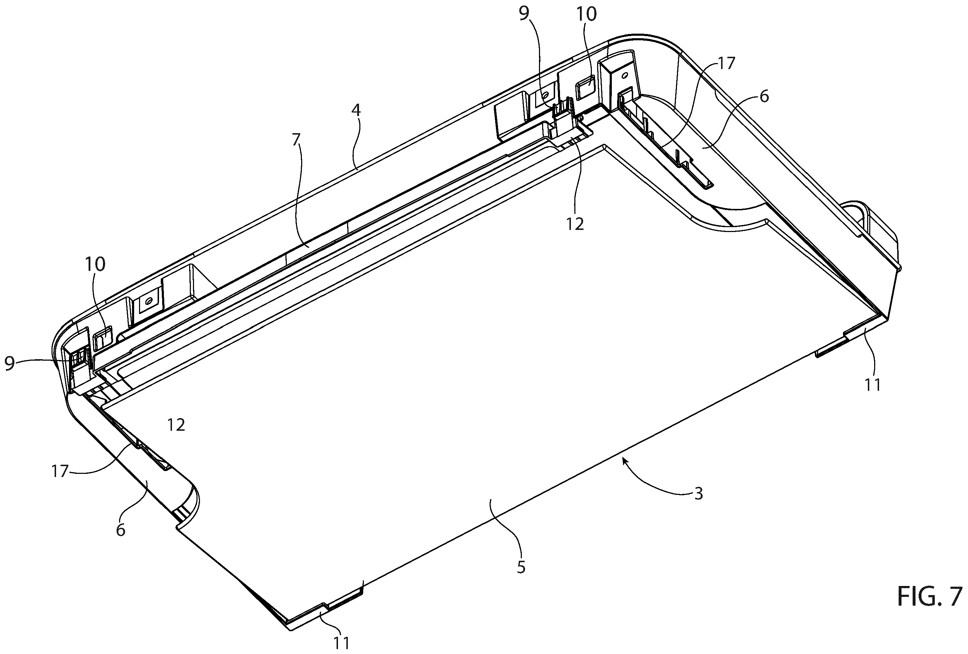

Figures 5-7 show successive steps in the process of removing the inner panel 5. The condition in Figure 5 is how it appears to the user when opening the oven 1. The lips 9 with the door open are accessible. By pressing on the lips 9 they are released from the windows 10 (backward position) and the lower edge of the inner panel 5 can be lifted by rotating the panel 5 about the upper edge housed in the seats 11. This position is visible in Figure 6 where it is sufficient to slide the upper edge out of the seats 11 to remove the panel 5 from the rest of the door 3. Finally, Figure 7 shows how the profile 7 can also be removed from the panel 5, as the lower edge is only housed in the U-shaped seats 12.
Once the inner panel has been removed, the intermediate panel in this example is also removable because this panel is also held in place in use by the drip-collecting profile by means of special ribs that extend beyond the inner panel towards the inside of the door. The intermediate panel also has an upper edge that can be slid out like the inner panel.

It is clear that changes and variations can be made to the oven described and shown herein without departing from the protection scope of the present invention, as defined in the appended claims.

## Claims

1. A steam oven (1), eventually as countertop oven;
wherein the oven (1) comprises:
- a box-shaped outer frame (2) defining a cooking chamber and comprising a door (3) movable between a substantially vertical closed position, wherein it isolates the cooking chamber, and a substantially horizontal open position, wherein the user can access the cooking chamber;
wherein the door (3) is rotatable about an axis passing through its lower edge and comprises:
- an external panel (4);
- an inner panel (5) arranged, in use, between the outer panel (4) and the cooking chamber at a distance from the outer panel (4);
- eventually an intermediate panel (15) arranged between the outer panel (4) and the inner panel (5);
- a door frame (6) configured to support the panels and coupled via hinges to the outer frame (2) to enable the door (3) to move;
- a drip-collecting profile (7) coupled to a bottom edge of the inner panel (5) and to the door frame (6); wherein the drip-collecting profile (7) runs substantially along the entire bottom edge of the inner panel (5) and it is configured such that during the opening of the oven (1) it collects drips that may be present on the inner face of the inner panel (5) and guides them to a tank inside the oven (1) ;
wherein the coupling between the drip-collecting profile (7) and the door frame (6) is selectively releasable (8), accessible to the user with door (3) at least partially open and comprises at least one elastic lip (9) and a corresponding window seat (10) obtained on the drip-collecting profile (7) and door frame (6), respectively, or vice versa.

2. The oven as claimed in claim 1, wherein there are two elastic lips (9) substantially at the ends of the drip-collecting profile (7).

3. The oven as claimed in any of the preceding claims, wherein the upper edge of the inner panel (5) is housed by sliding into at least one U-shaped seat (11) of the door frame (12) so that, once the coupling between drip-collecting profile (7) and door frame (6) is released, the inner panel (5) is first rotatable around its upper edge still in the seat (11) and then removable from the door (3) by sliding the upper edge out of the corresponding at least one seat (11).

4. The oven as claimed in claim 3, wherein two U-shaped seats (11) are provided substantially at the ends of the upper edge of the inner panel (5).

5. The oven as claimed in any of the preceding claims, wherein the coupling between the drip tray profile (7) and the bottom edge of the inner panel (5) is selectively releasable.

6. The oven as claimed in claim 5, wherein the drip tray profile (7) comprises at least one U-shaped seat (12) for housing the lower edge of the inner panel (5).
